# EUROPEAN PATENT APPLICATION

(11) **EP 0 810 151 A2**
(43) Date of publication of application: **03.12.1997**
(21) Application number: 97201465.8
(22) Date of filing: 15.05.1997
(51) Int. Cl.: B63B 22/02

(54) **Method and apparatus for conveying fluids between two bodies subjected to relative rotary movement**

(30) Priority: 31.05.1996 IT MI961107
(71) Applicant: Tecnomare S.p.A., 30124 Venezia (IT)
(72) Inventor: Vielmo, Paolo, 30126 Venezia, Lido (IT); Di Tella, Vincenzo, 35121 Padova (IT)
(74) Representative: Zanardo, Giovanni

(57) **Abstract**

This invention provides a method for conveying fluids via two structural bodies subjected to substantial relative rotary movements within floating installations in open sea, and an apparatus for implementing the method. Specifically, the invention enables a ship to orientate freely about a turret structure (3) by means of deformations distributed uniformly along bands (26) of flexible pipes positioned and advantageously formed, one following another, to effect the connection to the two ends subjected to relative rotation.

## Description

This invention relates to a method and apparatus for conveying fluids via two structural bodies subjected to mutual relative rotation, in particular in installations floating in open sea in which a ship, positioned permanently offshore, is free to orientate about a turret structure housed in a cylindrical cavity in the ship and anchored to the sea bed. The free orientation of the ship is enabled by bands of flexible pipes, which deform uniformly with self-regulating effect.

Said flexible pipes can be of any known composition provided they are suitable for the specific application concerned, and shall be referred in the description and claims as flexible pipelines or pipes, with the same meaning.

It is well known that for hydrocarbon production from sea deposits, floating petrochemical process plants represent a technically feasible and economically advantageous solution, especially when the sea depth or a limited quantity of available hydrocarbon reserves does not justify the use of fixed platforms.

Said floating petrochemical process plants have a basic architecture similar to general chemical process plants and consist of a floating construction, in particular a ship suitable for the specific purpose, anchored to the sea bed by a turret structure to which the mooring lines are connected. The floating ship is free to rotate about the turret structure, which is advantageously inserted into a cylindrical cavity provided substantially in the central region of the ship, or is supported by projecting structures in proximity to the ship bow or stern.

Relative rotation between the floating structure, or ship as called hereinafter, and said turret structure is enabled and operated by bearing members in the form of shoes, rollers or wheels. The floating ship can therefore passively or actively assume that orientation which minimizes wave, current and wind action by rotating about the turret, which preserves a practically constant orientation relative to the sea bed, as imposed by the system of anchoring to the sea bed. This operative need for rotary orientation of the ship requires the solution to the problem of transferring various process fluids between a substantially fixed turret structure and a floating ship construction rotating relative to the turret. The state of the art has seen various implementations of fluid transfer constructions, providing fluid passage continuity between two relatively rotating structural bodies. Devices are known consisting of rotary joints which for each path of the fluids to be transferred comprise two coaxial cylindrical ring elements connected mechanically and hydraulically one to the ship and the other to the turret. Between said rings, one of which is internal and the other external, there are provided a fluid passage cavity, dynamic seal members between the facing surfaces in relative movement, and passage ports between one and the other to enable process fluids to be transferred. When, as in most operations, there is the need to transfer a large number of independent process fluid lines, the various rotary joint devices must be coaxial and formed into an integrated functional structure, in which all the lines connected to the turret axially enter the internal rings fixed to the turret and leave radially from the external rotary rings fixed to the ship.

Such an application gives rise to a series of constructional and operational drawbacks in that the size of the internal rings is determined by the quantity and dimensions of the fluid lines which have to pass them, this requiring the presence of large dynamic sealing surfaces, which as is well known are costly and operationally precarious. There are also drawbacks deriving from the fact that any maintenance to or repair of a generic process fluid line and the rotary joint rings relative to that line necessarily involves halting the operation of the entire apparatus as all the lines above the line under repair have to be dismantled, it also not being possible, for safety reasons and the closeness of the fluid paths, to leave the fluid lines of the apparatus or plant in operation, even if not involved in the dismantling of the joint. Further drawbacks derive from the mechanical complexity of the multi-line rotary joint and the presence of sliding dynamic seals subjected to high operating pressures, resulting in high construction, installation and maintenance costs to ensure highest reliability of the dynamic seal devices.

Devices are also known consisting of flexible pipes connected at one end to the turret and at the other end to the ship. These are positioned to form a loop within the inner housing provided one half within the turret and the other half externally within the ship. When the ship rotates about the turret, the loop formed by the flexible pipe unwinds from or winds against the inner wall of the toroidal housing rigid with the turret and, respectively, winds against or unwinds from its outer wall rigid with the ship.

It is apparent to the expert of the art that the system geometry and the necessarily limited length of the flexible pipes and their chain support structure allows only a limited rotation of the ship about the turret. The limits to this rotation mean that the ship, as a floating structure, must be provided with transverse propulsion units enabling it to be actively positioned in accordance with the current or forecast meteorological and sea conditions and in accordance with allowable rotation arcs. In addition to this limitation there are serious design constraints such that the toroidal housing structure must be of considerable dimensions and hence a high structural weight and cost, with excessive flexible pipe lengths. These and other applications proposed by the known art to satisfy all operational requirements in floating installations conveying several fluids between two relatively rotating bodies have frequently resulted in precarious operation and poor reliability.

An object of the present invention is to eliminate the aforesaid drawbacks by a method and apparatus giving faultless and perfectly reliable results in conveying fluids within floating installations in open sea for the production and treatment of hydrocarbons and their transfer (crude, water, gas, process product etc.).

A further object of the invention is to achieve the absence of mechanical seal members and the advantageous possibility of high line pressures, in relation to the limits of the constituent material of the flexible pipes.

A further and very important object and advantage of the invention is the ability to operate on a line without interrupting or altering the operation of the other lines, or to easily modify the structure (line number and characteristics) of the fluid transfer system.

These and further objects are all attained by the method of the present invention enabling fluids to be conveyed via two relatively rotating structural bodies, particularly in the specific use of ships anchored in open sea via a turret structure housed within a cylindrical cavity in the ship, to said turret there being connected the mooring lines such that the ship is free to rotatingly orientate about said turret supported by rolling or sliding elements, by means of allowable deformations distributed uniformly, with self-regulating effect, along bands of flexible pipes positioned and advantageously formed, one following another, to effect the connection of the turret and ship to the two ends subjected to relative rotation, in order to transfer a plurality of fluid lines from the sea bed to the ship and vice versa. Said method also enables the allowable flexural deformation to be distributed in equal quantities along the bands of flexible pipes to optimize uniform stress distribution along the linear extension of the individual flexible pipes, which deform progressively to an equal extent to allow reliable conveying of several fluids to be transferred between a fixed structure and a rotating structure.

Said method also allows maximum relative rotation of at least one round angle between the turret and ship at the minimum radius of curvature allowed by the flexible pipe for an equal number of adjacent pipe bands and for an equal linear length of the pipes, which operate with radii of curvature which self-adjust at substantially constant values along the flexural deformation lines of the superposed adjacent pipe portions.

The apparatus used for the practical implementation of the method of the present invention comprises:
- at least one assemblage of flexible pipes which are positioned in a band along cylindrical surfaces having a substantially vertical generating line and are connected at one end to the connector rigid with the turret and at their other end to the connector rigid with the ship;
- interconnection devices in the form of hinged chain elements provided with articulated joints and brackets enabling the flexible pipes of the bands to be supported and hooked, the pipes being positioned one above another to generate equal curvilinear deformations lying in superposed horizontal planes;
- a mechanical fixing device for hookedly supporting the end connector of the upper band of flexible pipes on the floating ship structure to transfer the fluids to the pipes connected to the equipment on board;
- rotary structures, one for each two superposed bands of flexible pipes, to support the ends of two adjacent bands and enable said ends to rotate rigidly about an axis coinciding with the axis of rotation of the floating ship about the turret, said rotary structures being supported directly, either by the ship by means of accessory structures, or by the turret by means of movable fixing members;
- linkages for the intermediate support of the flexible pipe band support chains, and arranged and advantageously spaced such as to stiffen the movable vertical positioning of the assemblage of said flexible pipes, said linkages being pivoted together to freely accompany the deformations of the flexible pipes subjected to the continuous relative rotation between the ship and turret.

According to one embodiment, the apparatus of the present invention comprises flexible pipe bands positioned individually in substantially horizontal planes, one above another.

Continuity of the flexible pipe bands in the apparatus used for the practical implementation of the present invention is achieved by rigid or deformable pipe connector portions.

The invention is described hereinafter on the basis of the embodiment represented schematically in the figures of the accompanying drawings which briefly indicate the characteristics of the invention, it being noted that all the accompanying drawings, and their description, correspond to a preferred embodiment to clarify its manner of implementation, however all those constructional modifications included in the general idea presented in the accompanying drawings are to be considered as falling within the requested protection.

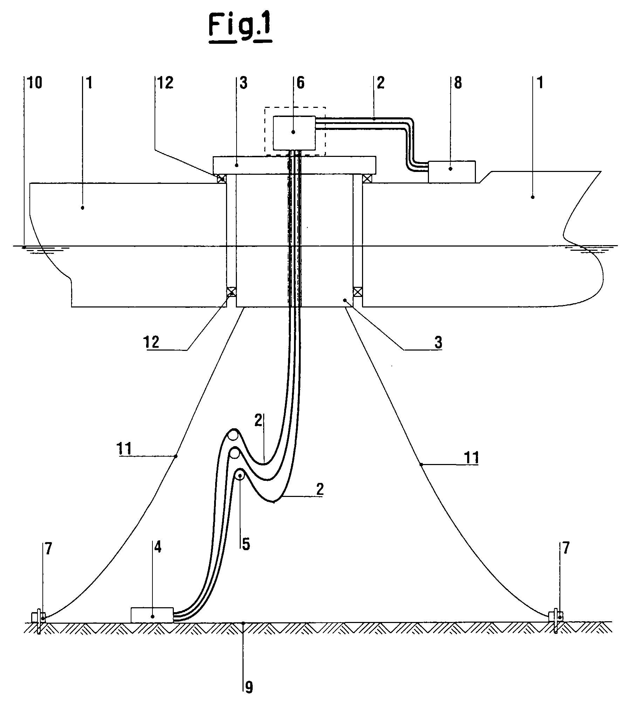

Figure 1 is an overall schematic vertical elevation of the structural apparatus of the present invention showing the floating ship installation and the turret structure housed within a central cylindrical cavity in the ship, and further schematically shows the mooring lines rigid with the turret and the flexible pipes of the fluid lines extending from the sea bed to the ship via the block formed by the structural apparatus of the invention;

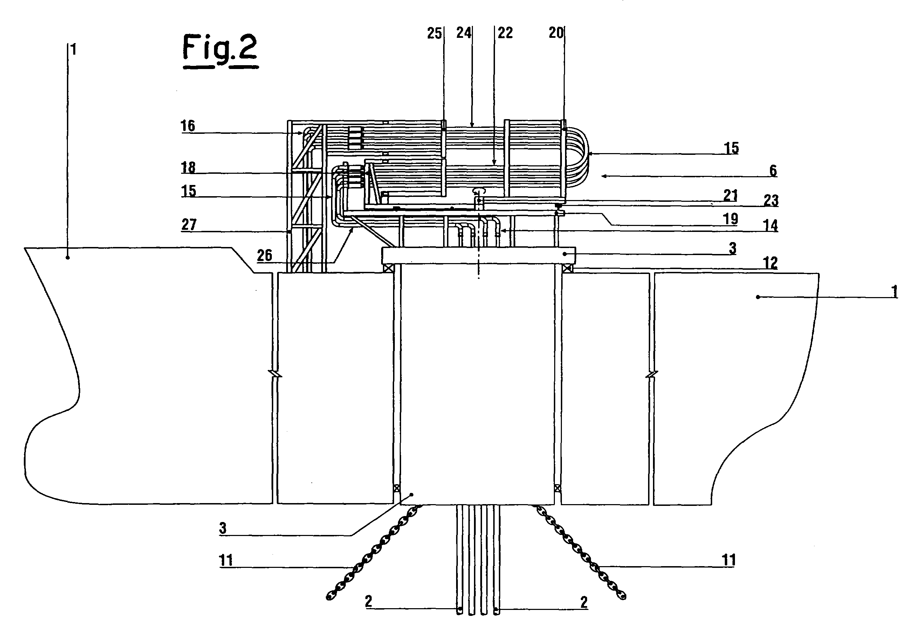

Figure 2 is an overall schematic side view of the bands of flexible pipes, these bands being superposed vertically one above another, and connected at one end to the connector device rigid with the turret and at the other end to the connector device rigid with the ship;

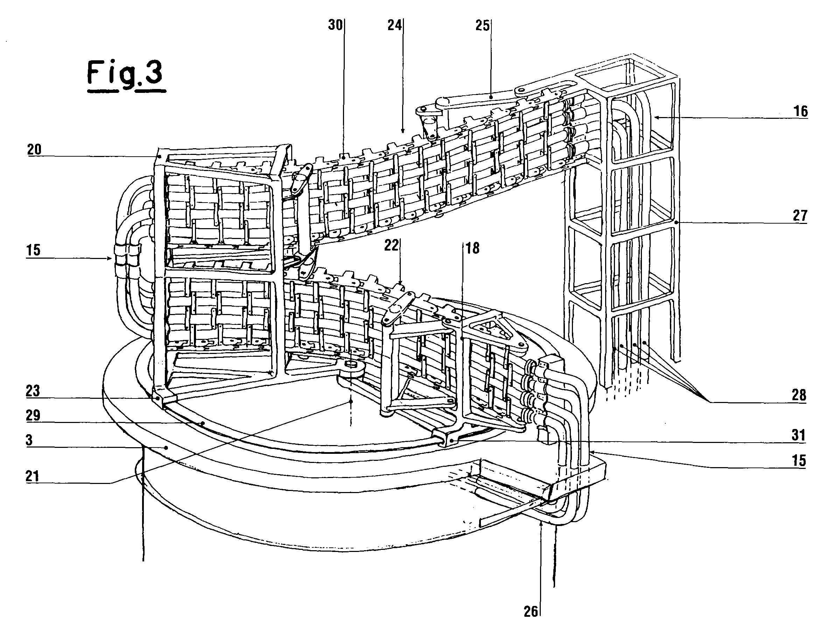

Figure 3 is an axonometric perspective schematic view of two adjacent superposed flexible pipe bands with the interconnection devices in the form of hinged chain elements provided with articulated joints, and further shows the rotary structures which support the end of the two adjacent bands and enable said ends to rotate rigidly about an axis coinciding with the axis of rotation of the floating ship about the turret by movable fixing members;

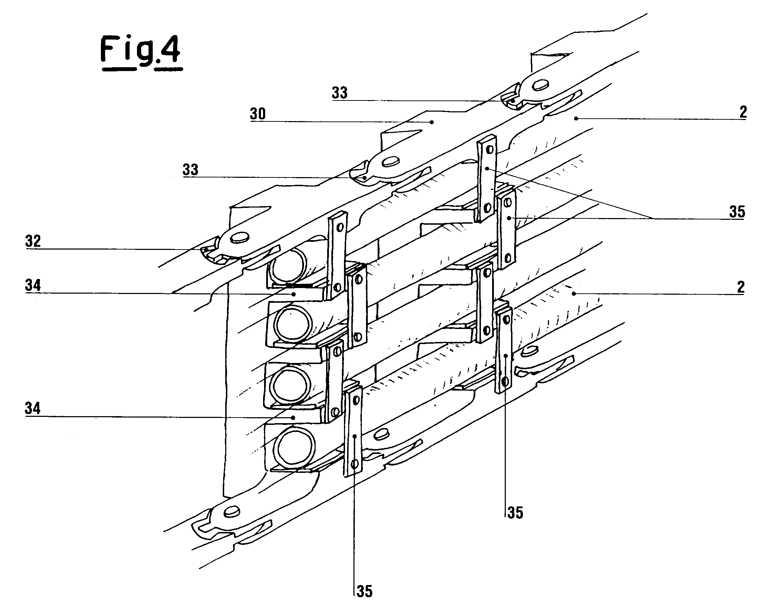

Figure 4 is an axonometric perspective schematic view of a portion of flexible pipes interconnected by hinged chain elements provided with articulated joints and with brackets, enabling the flexible pipes to be supported and hooked one above another to form a single band;

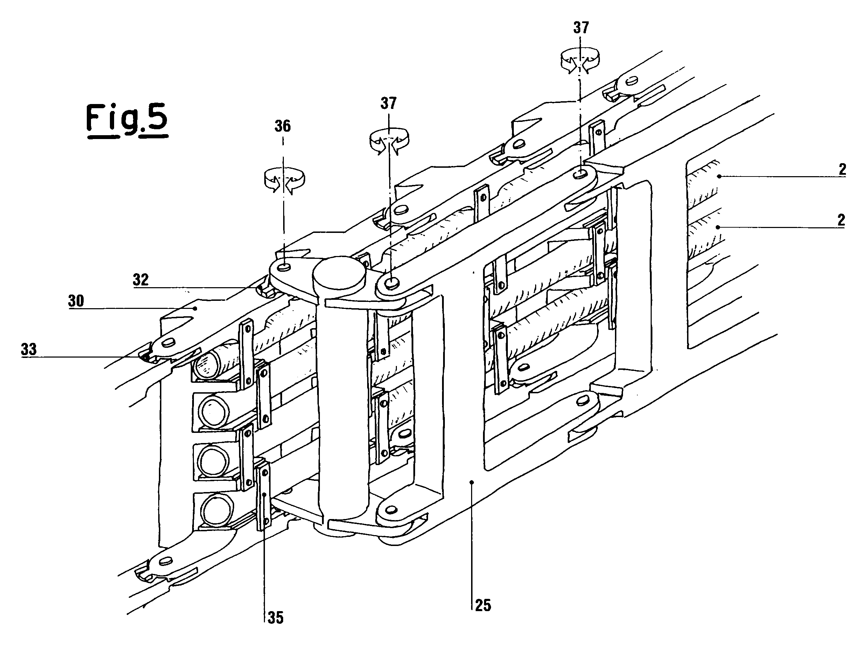

Figure 5 is an axonometric perspective schematic view of a portion of flexible pipes interconnected by hinged chain elements provided with articulated joints and brackets with intermediate supporting linkages arranged to stiffen the movable vertical positioning of the assemblage of flexible pipes;

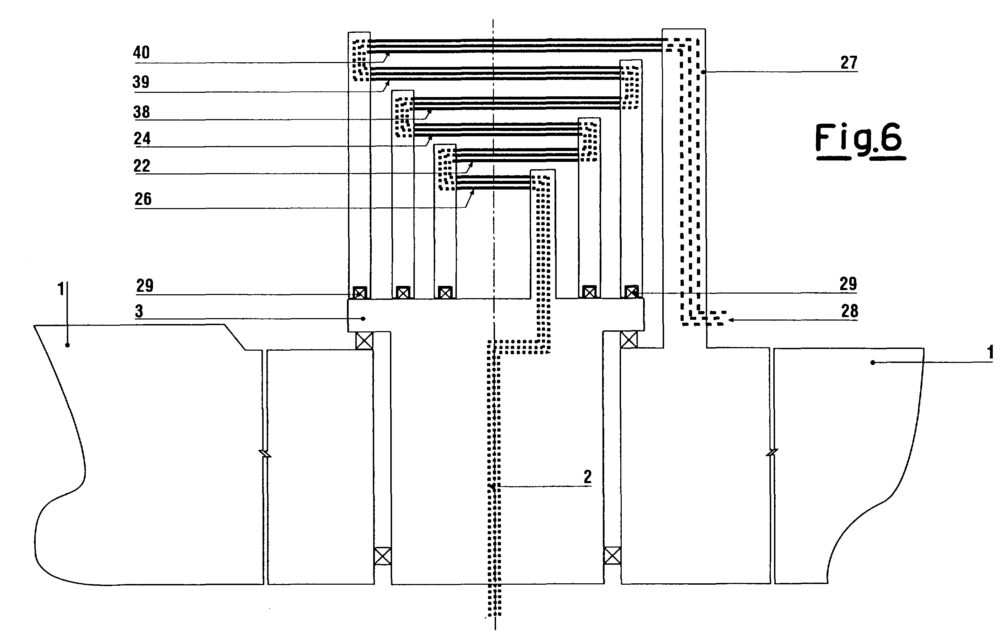

Figure 6 is a schematic overall vertical elevation of the apparatus with several bands of superposed flexible pipes for large relative rotations through a number of round angles, and further schematically shows the rotary support structures for the ends of two adjacent bands to enable said ends to rotate rigidly about an axis coinciding with the axis of rotation of the floating ship about the turret;

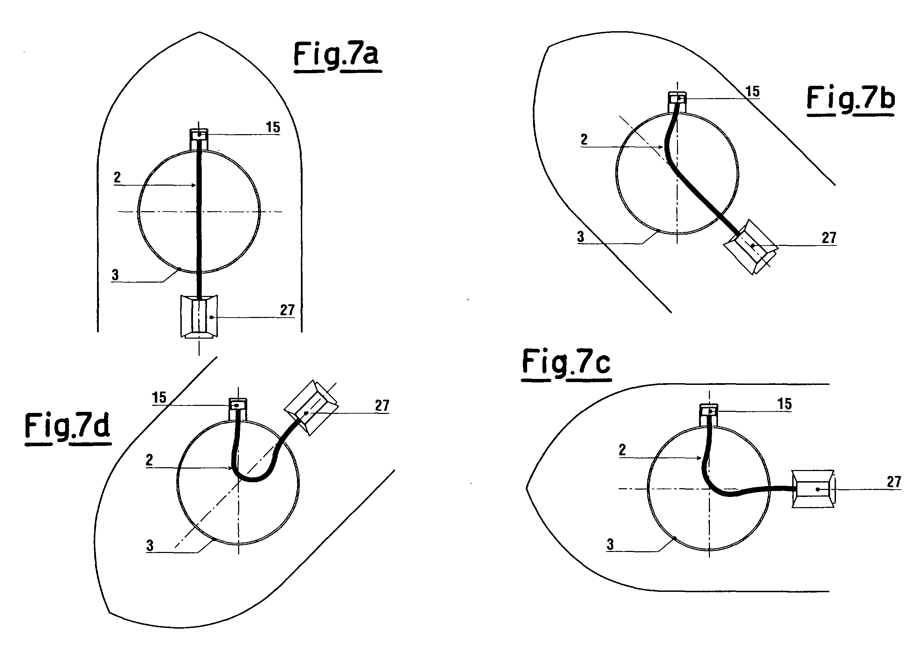

Figure 7 is a schematic illustration from above showing the relative rotational positions, indicated respectively by a, b, c, d, between the floating ship structure and the turret structure when only one band of flexible pipes is present;

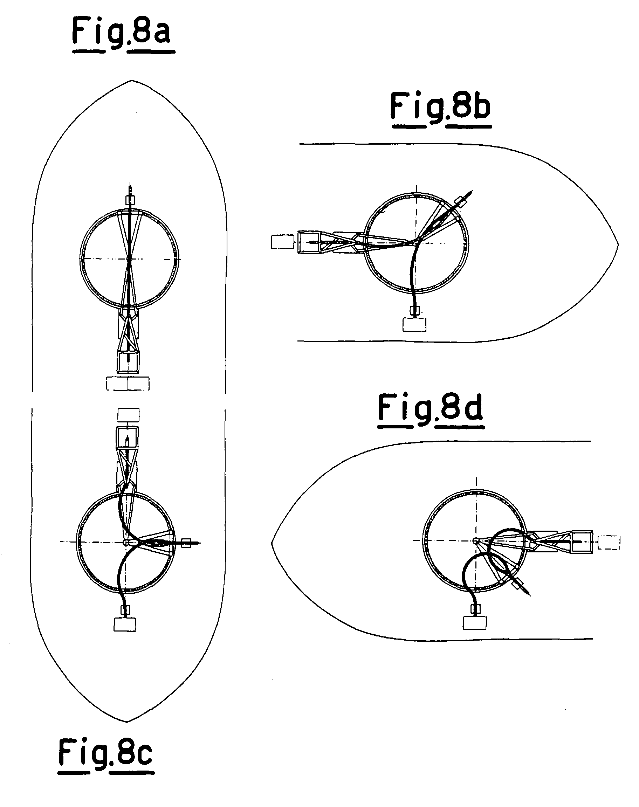

Figure 8 is a schematic illustration from above showing the relative rotational positions, indicated respectively by a, b, c, d, between the floating ship structure and the turret structure when two bands of adjacent, superposed flexible pipes are present, similar to the axonometric perspective view of Figure 3;

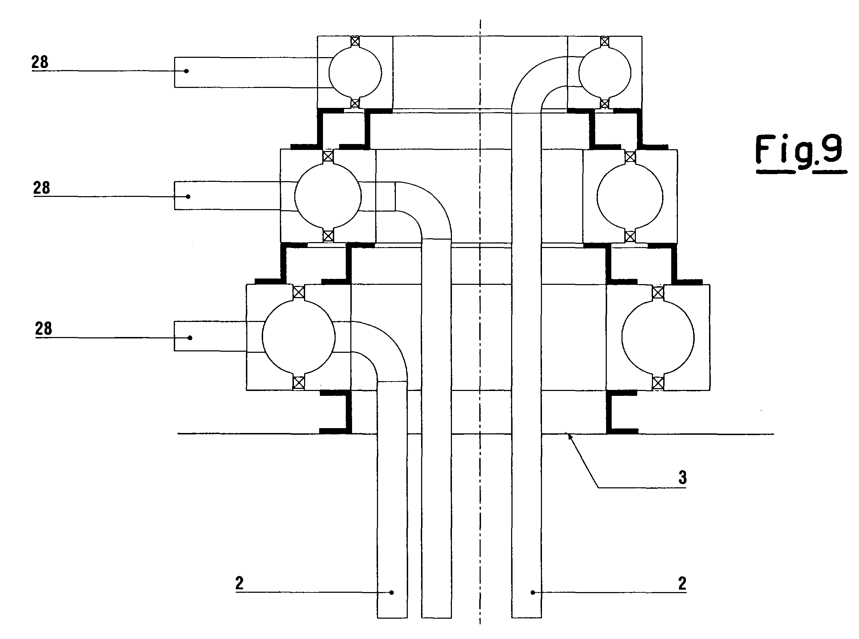

Figure 9 is a schematic illustration of a consolidated application of the known art consisting of rotary joints, which for each path of the fluids to be transferred comprise two cylindrical coaxial ring elements connected mechanically and hydraulically one to the ship and the other to the turret respectively;

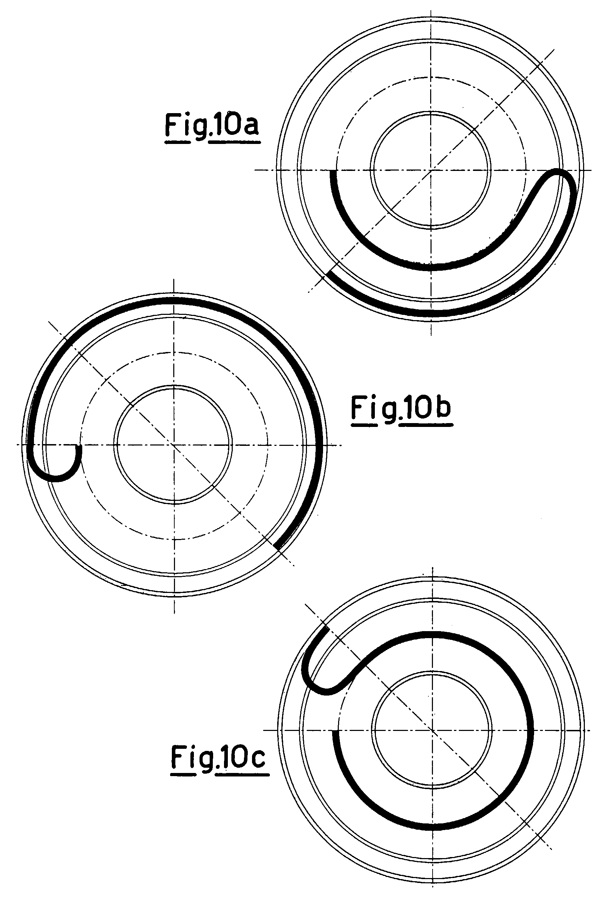

Figure 10 is a schematic illustration of a consolidated application of the known art consisting of flexible pipes shown in the positions a, b, c respectively, forming a loop within an annular housing, of which the inner half is provided in the turret and the outer half is provided in the ship.

In the figures, identical parts or parts with identical functions carry identical reference numerals. Again in the figures, for overall clarity those parts not necessary for understanding the invention are omitted, or are presented generically as they are known per se. In said figures: 1 is the floating petrochemical process structure, preferably a ship suitable for this specific use and anchored on the surface 10 in open sea; 2 are the flexible pipelines which transfer the process fluids from the connector 4, anchored rigidly to the sea bed 9, to the apparatus 6 of the present invention to feed them continuously to the connector 8 connected to the equipment on board the floating ship. Along their immersed length, said flexible pipelines 2 comprise a number of floats 5 provided to support said flexible pipelines suspended in the sea, so that they assume a flexural floating configuration necessary to ensure that they are not subjected to the traditional traction well known to the expert of the art; 3 is the turret structure housed in a cylindrical cavity in the ship 1, to this turret there being connected the mooring chains 11 fixed to driven piles 7 rigid with the sea bed 9. Said turret structure 3 is supported by a bearing system 12 which enables the floating ship 1 to orientate freely about the turret, which substantially maintains with time a constant orientation imposed by the anchoring system; 14 is the connector formed from rigid or deformable pipe pieces which provides the sealed connection between the flexible pipes 2 leaving the turret structure 3 and the first band 26 of flexible pipes 2 of the structural apparatus of the invention; 15 are the connectors formed from pipe pieces which provide the sealed connection for the ends of adjacent flexible pipe bands, in particular of the adjacent bands 26 and 22 and of the adjacent bands 22 and 24 and which follow each other; 16 is the connector formed from pipe pieces which provides the sealed connection between the flexible pipe band 24 and the pipes rigid with the ship which are supported by the structure 27 rigid with the ship; 18 is a structure formed from several elements joined together and articulated by means of pins enabling them to freely accompany the flexural deformations of the flexible pipes, said structure 18 which supports the flexible pipes enabling them to be rotated rigidly about the axis 21, ie the axis coinciding with the axis of rotation of the floating ship 1 about the turret 3, by means of the prismatic guide coupling between the follower 31 and the circumferential base rail 29 positioned advantageously projecting on the turret via the rigid support plate 19; 20 is a structure similar in operation to the aforedescribed structure 18 and formed with elements which rotate rigidly about the axis 21 by means of the prismatic guide coupling between the follower 23 and the circular rail 29, said structure 20 being the support device for the ends of the flexible pipe bands 22 and 24; 25 are intermediate or terminal support linkages along the articulated chains 30 which support the flexible pipes and position them in a band, said linkages being arranged and advantageously spaced in such a manner as to stiffen the movable vertical positioning of the assemblage of said flexible pipes; 28 are the pipes connected to the equipment on board the floating ship, said pipes being protected and positioned by the rigid structure 27 integral with the ship; 30 is a chain, or similar element, formed from links articulated about vertical axes of rotation 36 and consequently enabling all the hoses of a generic band to assume an equal curvilinear deformation, said articulated links, interconnected by pins, being provided with brackets 34 and flat frontal closure plates 35 for positioning and hooking the superposed flexible pipes along a vertical plane; 33 and 32 are mechanical angular travel limit stops, advantageously formed within the elements of the articulated chain 30, which limit maximum rotation to that allowed by the integrity of the flexible pipes 2 for their operational safety as transport lines for pollutant fluids; 37 are the axes of rotation of the intermediate or end support linkages 25; 38, 39, 40 are additional bands of flexible pipes provided with continuity, one following another, for large relative rotations of more than one round angle between the turret and the floating ship.

The following description of operation, given with reference to the stated figures, is easily understandable by the expert of the art and relates in particular to that which is new and hence examines only the apparatus of the present invention, which conveys fluids between two bodies subjected to relative rotary movement, with the equipment, structures, devices and means of the known art associated with it in the open-sea floating installation being excluded from the description.

The floating craft 1, or ship, housing the equipment for processing, treating, storing and possibly loading the product transported from/to the sea bed 9, is positioned with the aid of a tug and when in its precise position takes the mooring chains 11 and anchors them to driven piles 7 rigid with the sea bed 9. The mooring chains 11 are rigidly connected to the turret structure 3 housed on a suitable bearing system 12 within a cylindrical cavity in the ship 1. The mooring operation is carried out in accordance with the teachings of the known art as used for a considerable time in the operations involved in arriving at the mooring point.

Having terminated the mooring operations, the ship housing the process equipment is connected to the flexible pipelines 2 which transfer the process fluids from the connector 4, anchored firmly to the sea bed 9, to the apparatus 6 of the present invention, said fluids consisting normally, but not exclusively, of crude oil deriving from underwater wells, and/or its derivatives obtained from petrochemical processes, or fluids connected with its extraction and transport (chemical compounds, glycol etc.).

Said apparatus 6, proposed by the proponent within the framework of operational innovation, consists of at least one band of flexible pipes 2 supported in a vertical plane by suitable rack-type vertical support elements 30 which are hinged together to form a support chain and lie in a position diametric to the turret when the ship is in its preferential average orientation defined by the prevailing meteorological and sea conditions within the installation area. One end of said flexible pipe bands is connected to a connector 14 positioned on the turret 3, the other end being connected to a connector 16 protected by the structure 27 rigid with the ship 1. When the ship 1 rotates about the turret 3, the flexible pipes 2 and the relative support chains 30 flex in the form of deformations defined by the elastic characteristics of the lines and by the rotations and movements imposed on their ends by the relative rotation between the ship and turret, forming typically a deformation with at least one point of flexure. The limit to the relative rotation between the ship and turret is related to the minimum radius of curvature assumed by the deformations in the flexible pipes of each band which, for a determined pipe length and for a given distance ratio between the respective ends and the centre of rotation of the ship 1, ie the axis of the turret 3, is smaller the greater the relative rotation of the ends, ie the relative rotation between the ship and turret, and which must exceed the minimum value allowed by the structure formed by the flexible pipes when operating at working pressure.

To allow a greater angle of rotation between the ship 1 and the turret 3, several flexible pipe bands can be used - see Figure 6 - formed as previously described, these being positioned one after another and having one end 28 connected to the ship and the other end connected to the turret 3 respectively, the other adjacent ends being interconnected, for each pair of functionally corresponding flexible tube bands, by substantially rigid pipe portions 15 fixed to rotary frame structures 20 and 18 which can rotate about a vertical axis 21 coinciding with the axis of rotation of the ship 1 about the turret 3. Said rotary frame structures 20 and 18 can be made advantageously movable by a circular rail 29 fixed to the turret 3 or to the ship 1.

These rotary frame structures 18 and 20 are hence free to rotate both relative to the ship 1 and relative to the turret 3. The total angle of relative rotation between the ship and turret is hence given by the sum of the relative rotations between the ship and the rotary frame structure plus that between the rotary frame structure and the turret. To minimize flexural stresses on the flexible pipes and to distribute them equally between the two superposed bands - see Figure 2 - it is advisable that at each moment the rotation between the rotary frame structure and the turret 3 forms an angle equal to one half of that between the ship 1 and the turret 3. In this manner the deformations of the two flexible pipe bands 22 and 24 have configurations which, when viewed in vertical projection, are specular about a vertical plane passing through the turret axis and through the points at which the flexible pipes are fixed to the rotary frame structure.

Rotation between the rotary frame structure and the ship 1 or turret 3 can be achieved passively by the torque transmitted in flexing the flexible pipes, by the effect of their flexural rigidity, or by active movement actuators. A simpler movement of the rotary frame structures 18 and 20, which however does not minimize the stresses on the flexible pipes but deforms them in sequence, can be achieved by using mechanical travel stops which are positioned on said rotary frame structures 18 and 20 and on the support and coupling rail 29 to limit the maximum rotations allowed by the rotary frame structures, as predetermined and defined by the structural integrity of the walls of the flexible pipes, ie on attaining the allowable minimum radius of curvature for the said operating conditions. Preferably and advantageously, the articulated elements 30 of the support chain for the flexible pipe bands are provided with mechanical angular travel stops 33 and 32 which, when contacted, define the minimum radii of curvature to which the supported flexible pipes can be subjected.

In this manner the possible rotation between the ends of the flexible pipes can be maximized while ensuring their operational safety, which is of extreme importance in petrochemical plants, particularly in open sea. To allow free deformation of the flexible pipe bands, their support chains 30 are supported at two or more points by linkages 18, 20 and 25, which for certain sections of said chains allow free movement in the horizontal plane and free rotation about vertical axes, but because of their kinematic constraint characteristic prevent vertical movement and rotation about horizontal axes. For a preferred application of the proponent, said linkages consist of one or more movable slides 23 and 31, acting as followers, which are coupled to a circular rail element 29 arranged in plan in accordance with the normal movement trajectories of the support points in the free deformation of the flexible pipe bands together with the support structures in the form of hinged elements.

Said movable guides 23 and 31 effect a rotary coupling with the rail 29 by means of shoes, roller elements or like elements.

Other constructional arrangements could be based on articulated structures with one or more degrees of freedom undergoing plane motion with the axes of rotation of the relative articulations being vertical and parallel to each other and to the fixed structures. It is apparent that the constructional principle applied to two bands 22 and 24 (see Figure 3) of flexible pipes can be expanded and extended to a larger number of flexible pipe bands - 26, 22, 24, 38, 39 and 40 of Figure 6 - positioned one above another and one following another with the end bands 40 and 26 connected to the ship 1 and turret 3 respectively, and the intermediate bands being adjacent and connected to orientatable structures rotatable about the turret axis 21 by linkages or devices as heretofore described. The total possible rotation between the ship 1 and turret 3 is the sum of the maximum possible rotations for each flexible pipe band.

The aforegoing embodiment has been provided only as a non-limiting example of the invention. It is apparent that modifications and additions can be made by the expert of the art to the details of the apparatus but without leaving the general idea of the present invention.

## Claims

1. A method for conveying fluids via two structural bodies subjected to substantial relative rotary movements within floating installations in open sea, particularly in the specific use of ships permanently anchored in open sea via a turret structure housed within a cylindrical cavity in the ship, to said turret there being connected the mooring lines such that the ship, in floating, is free to rotatingly orientate by rotating on rolling elements rotating about said turret, which substantially maintains with time a constant orientation imposed by the system for its anchoring to the sea bed, said method being characterised by allowable deformations distributed uniformly, with self-regulating effect, along bands of flexible pipes positioned and advantageously formed, one following another, to effect the connection of the turret and ship to the two ends subjected to relative rotation, in order to transfer a plurality of fluid lines from the sea bed to the ship and vice versa.

2. A method for conveying fluids via two structural bodies subjected to substantial relative rotary movements as claimed in claim 1, characterised by distributing the allowable flexural deformation substantially in equal quantities along the bands of flexible pipes to optimize uniform stress distribution along the linear extension of the individual flexible pipes.

3. A method for conveying fluids via two structural bodies subjected to substantial relative rotary movements as claimed in claims 1 and 2, characterised by operating with radii of curvature which self-adjust at substantially constant values along the flexural deformation lines of the superposed adjacent pipe portions.

4. A method for conveying fluids via two structural bodies subjected to substantial relative rotary movements as claimed in claims 2 and 3, characterised by allowing maximum relative rotation of at least one round angle between the turret and ship at the minimum radius of curvature allowed by the flexible pipe for an equal number of adjacent pipe bands and for an equal linear length of the pipes.

5. A method for conveying fluids via two structural bodies subjected to substantial relative rotary movements as claimed in claim 1, characterised by operating with a plurality of flexible pipes which deform progressively to an equal extent to allow reliable conveying of several fluids to be transferred between a fixed structure and a rotating structure.

6. An apparatus for implementing the method claimed in claim 1, characterised by comprising:
- at least one assemblage of flexible pipes which are positioned in a band along cylindrical surfaces having a substantially vertical generating line and are connected at one end to the connector rigid with the turret and at their other end to the connector rigid with the ship;
- interconnection devices in the form of hinged chain elements provided with articulated joints and brackets enabling the flexible pipes of the bands to be supported and hooked, the pipes being positioned one above another to generate equal curvilinear deformations lying in superposed horizontal planes;
- a mechanical fixing device for hookedly supporting the end connector of the upper band of flexible pipes on the floating ship structure to transfer the fluids to the pipes connected to the equipment on board;
- rotary structures, one for each two superposed bands of flexible pipes, to support the ends of two adjacent bands and enable said ends to rotate rigidly about an axis coinciding with the axis of rotation of the floating ship about the turret, said rotary structures being supported directly, either by the ship by means of accessory structures, or by the turret by means of movable fixing members;
- linkages for the intermediate support of the flexible pipe band support chains, and arranged and advantageously spaced such as to stiffen the movable vertical positioning of the assemblage of said flexible pipes.

7. An apparatus as claimed in claim 6, characterised in that the intermediate support linkages are fixed to the structure and formed with elements pivoted together to freely accompany the deformations of the flexible pipes subjected to the continuous relative rotation between the ship and turret.

8. An apparatus as claimed in claim 6, characterised in that the flexible pipe bands are positioned individually in substantially horizontal planes, one above another.

9. An apparatus as claimed in claims 6 and 8, characterised in that continuity of the flexible pipe bands is achieved in the practical construction by substantially rigid pipe connector portions.
